# EUROPEAN PATENT SPECIFICATION

(11) **EP 0 944 968 B1**
(45) Date of publication and mention of the grant of the patent: **01.09.2004**
(21) Application number: 97947749.4
(22) Date of filing: 17.12.1997
(51) Int. Cl.: H04B 17/00, H04Q 7/36

(54) **METHOD AND APPARATUS FOR ESTIMATING FIELD STRENGTH**
VERFAHREN UND VORRICHTUNG ZUR FELDSTÄRKESCHÄTZUNG
PROCEDE ET APPAREIL D'ESTIMATION D'INTENSITE DE CHAMP

(30) Priority: 19.12.1996 FI 965129
(43) Date of publication of application: 29.09.1999
(73) Proprietor: Nokia Corporation, 02150 Espoo (FI)
(72) Inventor: SIPILÄ, Kari, FIN-01690 Vantaa (FI); KANGAS, Sakari, FIN-01650 Vantaa (FI); HEISKA, Kari, FIN-00240 Helsinki (FI)
(74) Representative: Brockman, Pertti Erik
(86) International application number: PCT/FI1997/000800
(87) International publication number: WO 1998/031112

(56) References cited:
- WO-A-96/36188
- US-A- 5 491 644

## Description

### TECHNICAL FIELD

The invention relates to a method of calculating the field strength of a radio network in connection with buildings when an outdoor transmitter is involved.

### PRIOR ART

When a radio system is being constructed, the aim is to achieve the desired coverage area with the lowest possible cost. When considering the locations of the base stations of the system, the required traffic capacity and the achieved coverage area are taken into account. The aim is to locate the base stations such that the achieved coverage is extensive and that the base station is located advantageously as far as radio wave propagation is concerned.

The present invention can be applied to cellular radio networks particularly in an environment having a plurality of buildings and where the radio network is implemented by means of micro cells. Micro cells refer to cells that are considerably smaller than the cells in a conventional cellular radio system. Cell sizes and base station transmission powers are relatively small. Micro cells are typically used in city centres requiring a high traffic capacity.

In this case the estimation of the coverage of the base stations to be located along the streets is difficult inside buildings in particular. Furthermore, if there is a separate indoor radio system, it is difficult to estimate the interference field caused by an outdoor radio system indoors. Similarly it is difficult to estimate the field strength of indoor base stations outside buildings.

Various methods and instruments have been designed for radio network planning. Vector maps including modelled terrain and building data on the desired area are commonly used as instruments in radio network planning. By means of a vector map a computer can be utilized to calculate the coverage and parameters associated with network operation for different base station locations. Determining indoor attenuation is, however, difficult. A generally applied method comprises determining the indoor coverage by estimating the general field strength outside the building, by estimating an attenuation coefficient for the outer walls and a corresponding attenuation coefficient for the interior walls. The results given by this method are, however, very inaccurate since the field strength in micro cells can also vary considerably indoors, and the use of an attenuation coefficient is insufficient.

Another known method comprises carrying out measurements in different buildings and placing a base station so as to achieve the best audibility. A drawback in this is, however, that the measurements are expensive and time-consuming. Furthermore, in practice measurements cannot be performed in all buildings in the area. A third method is to calculate the coverage by what are known as ray tracing methods. However, this is impractical since in this case the rays should also be able to propagate inside buildings. With present-day computers, the calculation time becomes too long owing to the interaction between outdoor and indoor structures. This method is suitable outdoors, since it is sufficient for the calculation to take into account the line of sight and the rays reflected or scattered from the walls of buildings, while the rays propagated through the buildings can usually be ignored.

### CHARACTERISTICS OF THE INVENTION

It is the object of the present invention to provide a method by which the indoor field strength can be determined with sufficient accuracy without the above problems.

This is achieved by a method of the type described in the preamble, characterized in that the method comprises determining estimates of the electromagnetic field produced by the transmitter on surfaces delimiting the building or a part thereof, determining the field strength inside the building or a part thereof by means of the estimates of the electromagnetic field calculated for the surfaces delimiting the building or a part thereof.

The invention also relates to a method of calculating the field strength of a radio network in connection with buildings when an indoor transmitter is involved. The method of the invention is characterized in that the method comprises determining estimates of the electromagnetic field produced by the transmitter on surfaces delimiting the building or a part thereof, determining the field strength outside the building by means of the estimates of the electromagnetic field calculated for the surfaces delimiting the building or a part thereof.

The invention further relates to an apparatus for calculating the field strength of a radio network in connection with buildings, the radio network comprising an outdoor transmitter. The apparatus of the invention is characterized in that the apparatus comprises means for determining estimates of the electromagnetic field produced by the transmitter on surfaces delimiting the building or a part thereof, and means for determining the field strength inside the building or a part thereof by means of the estimates of the electromagnetic field calculated for the surfaces delimiting the building or a part thereof.

The invention further relates to an apparatus for calculating the field strength of a radio network in connection with buildings, the radio network comprising an indoor transmitter. The apparatus of the invention is characterized in that the apparatus comprises means for determining estimates of the electromagnetic field produced by the transmitter on surfaces delimiting the building or a part thereof, and means for determining the field strength outside the building by means of the estimates of the electromagnetic field calculated for the surfaces delimiting the building or a part thereof.

The solution of the invention provides a plurality of advantages. The invention can be used to determine the field strength with a satisfactory accuracy without expensive measurements. The invention also avoids heavy calculation operations. The invention also enables the software for calculating indoor and outdoor field strength to be composed of modules, since the interface between them is easy to determine by the invention.

### DESCRIPTION OF THE DRAWINGS

In the following the invention will be described in greater detail with reference to examples according to the accompanying drawings, in which
Figure 1 shows an example of radio systems, to the planning of which the invention can be applied,
Figure 2 illustrates a number of buildings in an urban environment,
Figure 3 illustrates a building inside which the field strength is to be determined,
Figure 4 illustrates a building with an indoor transmitter, the field strength produced by which is to be determined,
Figure 5 illustrates another example of an urban environment, and
Figure 6 illustrates an example of the structure of the apparatus of the invention.

### DESCRIPTION OF THE PREFERRED EMBODIMENTS

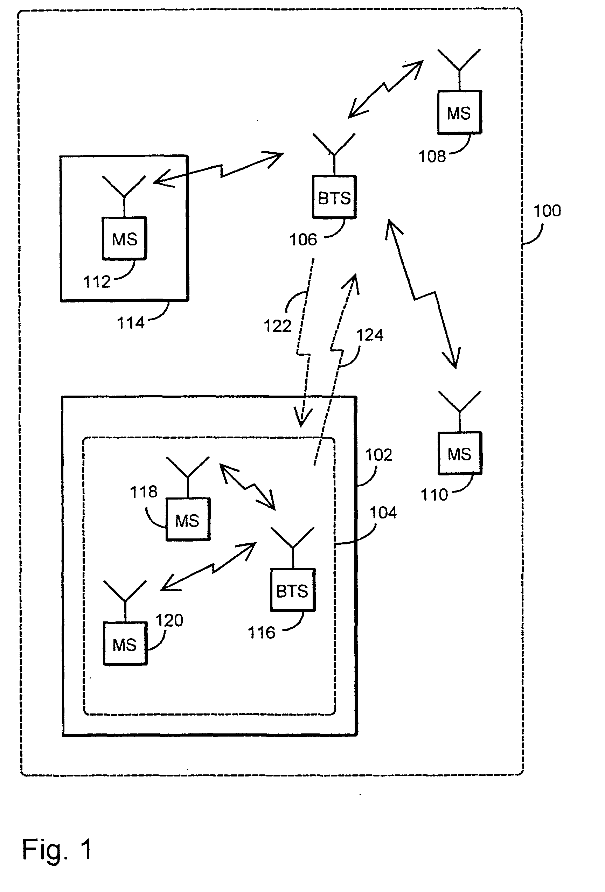

Thus the method of the invention can be preferably applied to planning a radio system. It is particularly applicable when planning radio systems to be implemented with micro cell technology in urban environments. Figure 1 illustrates some typical radio systems. The figure shows two systems, a typical cellular radio network 100 and an indoor network 104 in a building 102. In the cellular radio network 100 a base station 106 is located outside the buildings and comprises a number of subscriber terminals 108 to 112, some of which, 108, 110, can be outdoors, and some 112 inside buildings 114. The subscriber terminals have a bi-directional connection to the base station. An indoor pico cell network 104 in the building 102 comprises an indoor base station 116 and a number of terminals 118 to 120 located inside the building. Such networks can operate simultaneously, but the interference caused by them to one another has to be accounted for in planning thereof, such as the audibility of a signal 122 of the base station 106 of the cellular radio network 100 inside the building 102, and similarly the propagation of a signal 124 of the base station of the indoor network 104 of the building 102 outside the building 102.

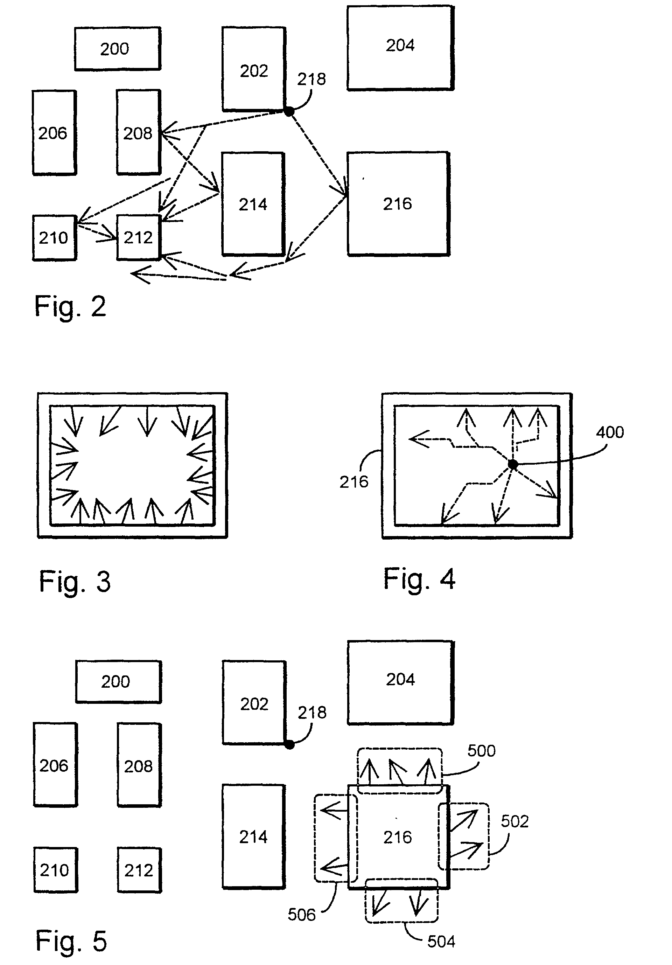

Let us next have a look at the map grid of Figure 2, showing a city block. The figure shows by way of example nine buildings 200 to 216. Let us assume that a base station 218 of a cellular radio network is located at a corner of a building 202. Let us study as an example building 212, inside which the field strength produced by the base station 218 of the cellular radio network is to be determined.

The basic idea of the invention is that estimates of the electromagnetic field on surfaces delimiting the building or a part thereof, such as the outer walls, are first estimated for determining the field strength produced by an outdoor transmitter inside the building. This can be carried out by utilizing existing methods for field strength estimation, such as ray tracing methods. As clearly distinct from prior art, the field strength is estimated on the outer surfaces of the building and the calculation is not extended inside the building. Thus, in the example of Figure 2, an estimate is made of the signals, shown by dashed lines, originating from the base station 218 and arriving at the environment of the building via different paths and being reflected and scattered from the walls and comers of surrounding buildings.

The next step is to determine the indoor field strength in the desired parts of the building by using as given values the estimates of the electromagnetic field calculated for the surfaces delimiting the building or a part thereof. This can be carried out by utilizing known methods of calculating indoor attenuation in buildings, but as distinct from what is known, the given value of a field outside the building is not a single estimated figure, but a more exact estimate of the field strength on the outer surfaces of the building. This is illustrated by Figure 3 which shows the building 212 under study. Estimates of the electromagnetic field have been determined for the outer surfaces of the building and they are used to determine the indoor field strength of an outdoor base station. The estimates of the electromagnetic field can comprise e.g. a number of field strength vectors whose directions and strengths are known. Using these vectors as basic data enables a more exact estimate of the field strength in the desired parts of the building to be determined than before.

Let us next view a situation where the base station transmitter is located inside a building. Figure 4 illustrates a building 216 in which an indoor radio network comprising one or more base stations 400 has been implemented. At the same time, let us view Figure 5 showing a map grid of the kind shown in Figure 2 and illustrating a number of buildings 200 to 216 and a base station 218 of an external network. Thus the problem is to determine the field strength produced by the network inside the building 216 outside the building 216.

The basic idea of the invention is that for determining the field strength produced by an indoor transmitter outside a building, estimates of the electromagnetic field on surfaces delimiting the building or a part thereof, such as the outer walls, are first estimated. In doing this, existing methods of estimating field strength can be utilized. As distinct from prior art, the field strength is estimated on the outer surfaces of a building and the calculation is not extended outside the building. Thus, in the example of Figure 4, an estimate is made of the signals, shown by dashed lines, originating from the base station 400 and arriving at the outer surfaces of the building 216 via different paths and being reflected and scattered from the interior walls, corridors and structures inside the building. The result of the calculation are estimates of the electromagnetic field outside the building. The estimates may comprise a number of vectors 500 to 506 whose direction and strength are calculated.

The next step is to determine the field strength in the desired parts outside the building by using as given values the estimates of the electromagnetic field calculated for the surfaces delimiting the building or a part thereof. This can be carried out by utilizing known methods of determining the field strength, but as distinct from what is known, the given value of a field inside the building is not a single estimated figure, but a more exact estimate of the field strength on the outer surfaces of the building.

Naturally, field strength can also be calculated three-dimensionally, the outer surfaces of the buildings having different field strengths at different heights.

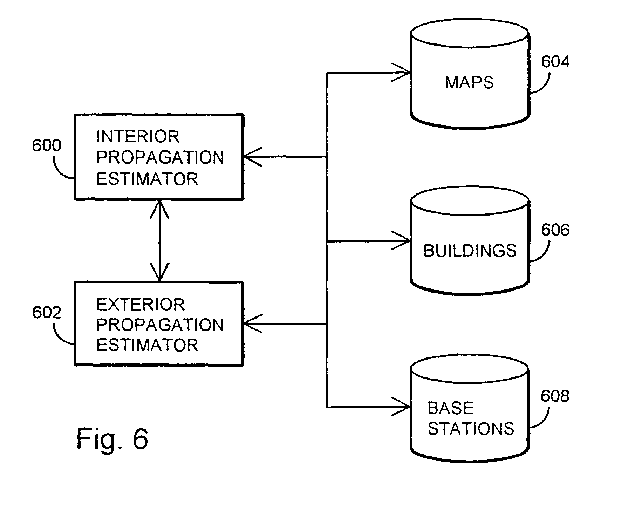

Let us next view the operation of the apparatus of the invention with reference to Figure 6. The apparatus of the invention comprises first calculation means (600) for determining the field strength inside the building or a part thereof, and second calculation means (602) for determining the outdoor radio field strength. In the following, the first calculation means will be referred to as indoor calculation means and the second calculation means as outdoor calculation means.

The apparatus further comprises memory means (604) for maintaining a map database, memory means (606) for maintaining a building database, and memory means (608) for maintaining a base station database. The map database consequently comprises a digital map covering the area under study. The building database comprises building data from the area represented by the map database, i.e. the walls and number of floors of the buildings, for example. The base station database comprises location data and the most important parameters concerning the base stations and attenuation values at map points within the service and interference area of a base station.

Let us first study how the field strength of an outdoor base station in the desired area outside the buildings is calculated. The outdoor calculation means 602 read base station data from the base station database 608. Next, the data on the desired area are read from the map database 604. The field strength in the desired area is then determined by using base station data and map data. The calculated values can be stored in the base station database.

Let us next study how the field strength of an indoor base station inside the base station building is determined. The indoor calculation means 600 read base station data from the base station database 608. Base station building data is read from the building database 606. The field strength inside the building is then determined by using base station data and building data. The calculated values can be stored in the base station database.

Let us next study how the field strength of an outdoor base station inside the desired building is determined in the solution of the invention. The indoor calculation means 600 read base station data from the base station database 608. Up-to-date estimates for the field at the boundaries of the desired building are then read from the base station database 608. If such estimates are not available, they are calculated by means of the outdoor calculation means. The indoor calculation means read the data on the desired building from the building database 606. The indoor calculation means calculate the field strength inside the building by using base station data, building data and the estimates at the boundaries of the building.

Let us next study how the field strength of an indoor base station is determined in the desired area outside the buildings. The outdoor calculation means 602 read base station data from the base station database 608. Up-to-date estimates for the field at the boundaries of the base station building are then read from the base station database. If such estimates are not available, they are calculated by means of the indoor calculation means 600. The outdoor calculation means 602 read the data on the desired area from the map database 604 and calculate the field strength in the desired area outside the buildings by using map data, base station data and the estimates at the boundaries of the base station building.

In conclusion, let us study how the field strength of an indoor base station is determined inside a building other than the base station building. The indoor calculation means 600 read base station data from the base station database 608 and Up-to-date estimates for the field at the boundaries of the desired building. If such estimates are not available, they are calculated by means of the outdoor calculation means. For the calculation, the outdoor calculation means need estimates at the boundaries of the base station building, and if such estimates are not available, the calculation needed must be carried out by the indoor calculation means. The indoor calculation means 600 read the data on the desired building from the building database 606 and calculate the field strength inside the building by using base station data, building data and the estimates at the boundaries of the building.

Although the invention has been described above with reference to the example according to the accompanying drawings, it is obvious that the invention is not restricted to it, but can be modified in many ways within the scope of the inventive idea disclosed in the attached claims.

## Claims

1. A method of calculating the field strength of a radio network in connection with buildings (102,114) when an outdoor transmitter (106) is involved, **characterized in that** the method comprises
determining estimates of the electromagnetic field produced by the transmitter (106) on surfaces delimiting the building (104) or a part thereof,
determining the field strength inside the building or a part thereof by means of the estimates of the electromagnetic field calculated for the surfaces delimiting the building or a part thereof.

2. A method of calculating the field strength of a radio network in connection with buildings (102,114) when an indoor transmitter (116) is involved, **characterized in that** the method comprises
determining estimates of the electromagnetic field produced by the transmitter (116) on surfaces delimiting the building (102) or a part thereof,
determining the field strength outside the building by means of the estimates of the electromagnetic field calculated for the surfaces delimiting the building or a part thereof.

3. A method as claimed in claim 1 or 2, **characterized in that** the surfaces delimiting the building comprise the outer walls of the building.

4. A method as claimed in claim 1 or 2, **characterized in that** the surfaces delimiting the building comprise the floors and outer walls of the building.

5. A method as claimed in claim 1 or 2, **characterized in that** when calculating the estimates of the electromagnetic field for the surfaces of the building, the propagation model used is different from that used in calculating the field strength on the basis of the estimates of the electromagnetic field calculated for the surfaces.

6. A method as claimed in claim 1, **characterized in that**
a map database, a building database and a base station database are maintained in the method, and that
base station data are read from the base station database,
data on the desired area are read from the map database,
first electromagnetic field estimates in the desired area are determined on the basis of base station data and map data,
data on the desired building are read from the building database,
the field strength inside the building is determined on the basis of building data, the first electromagnetic field estimates and base station data.

7. A method as claimed in claim 2, **characterized in that**
a map database, a building database and a base station database are maintained in the method, and that
base station data are read from the base station database,
data on the desired building are read from the building database,
first electromagnetic field estimates in the desired building are determined on the basis of base station data and building data,
data on the desired area are read from the map database,
the field strength outside the building is determined on the basis of map data, the first electromagnetic field estimates and base station data.

8. An apparatus for calculating the field strength of a radio network in connection with buildings (102,114), the radio network comprising an outdoor transmitter (106), **characterized in that** the apparatus comprises
means (602) for determining estimates of the electromagnetic field produced by the transmitter (106) on surfaces delimiting the building (104) or a part thereof, and
means (600) for determining the field strength inside the building or a part thereof by means of the estimates of the electromagnetic field calculated for the surfaces delimiting the building or a part thereof.

9. An apparatus for calculating the field strength of a radio network in connection with buildings (102,114), the radio network comprising an indoor transmitter (106), **characterized in that** the apparatus comprises
means (600) for determining estimates of the electromagnetic field produced by the transmitter (116) on surfaces delimiting the building (102) or a part thereof, and
means (602) for determining the field strength outside the building by means of the estimates of the electromagnetic field calculated for the surfaces delimiting the building or a part thereof.

10. An apparatus as claimed in claim 8 or 9, **characterized in that** the apparatus comprises means (604) for maintaining a map database, means (606) for maintaining a building database, and means (608) for maintaining a base station database.

## Patentansprüche

1. Verfahren zur Rechnung der Feldstärke eines Funknetzes in Verbindung mit Gebäuden (102, 114), wobei ein draussen befindlicher Sender (106) benutzt wird, **dadurch gekennzeichnet, dass** bei dem Verfahren
Schätzungen des durch den Sender (106) produzierten elektromagnetischen Feldes auf Oberflächen bestimmt werden, die das Gebäude (104) oder einen Teil des Gebäudes begrenzen,
die Feldstärke innerhalb des Gebäudes oder eines Teils des Gebäudes anhand der Schätzungen des elektromagnetischen Feldes bestimmt wird, die für die Oberflächen gerechnet sind, die das Gebäude oder einen Teil des Gebäudes begrenzen.

2. Verfahren zur Rechnung der Feldstärke eines Funknetzes in Verbindung mit Gebäuden (102, 114), wobei ein drinnen befindlicher Sender (116) benutzt wird, **dadurch gekennzeichnet, dass** bei dem Verfahren
Schätzungen des durch den Sender (116) produzierten elektromagnetischen Feldes auf Oberflächen bestimmt werden, die das Gebäude (102) oder einen Teil des Gebäudes begrenzen,
die Feldstärke ausserhalb des Gebäudes anhand der Schätzungen des elektromagnetischen Feldes bestimmt wird, die für die Oberflächen gerechnet sind, die das Gebäude oder einen Teil des Gebäudes begrenzen.

3. Verfahren nach Anspruch 1 oder 2, **dadurch gekennzeichnet, dass** die Oberflächen, die das Gebäude begrenzen, die äusseren Wände des Gebäudes aufweisen.

4. Verfahren nach Anspruch 1 oder 2, **dadurch gekennzeichnet, dass** die Oberflächen, die das Gebäude begrenzen, die Böden und die äusseren Wände des Gebäudes aufweisen.

5. Verfahren nach Anspruch 1 oder 2, **dadurch gekennzeichnet, dass** wenn die Schätzungen des elektromagnetischen Feldes für die Oberflächen des Gebäudes gerechnet werden, unterscheidet sich das zu verwendete Ausbreitungsmodell vom Modell, das bei Rechnung der Feldstärke aufgrund der für die Oberflächen gerechneten Schätzungen des elektromagnetischen Feldes verwendet wird.

6. Verfahren nach Anspruch 1, **dadurch gekennzeichnet, dass** eine Kartendatenbank, eine Gebäudedatenbank und eine Basisstationsdatenbank beim Verfahren gewartet werden, und dass
Basisstationsdaten aus der Basisstationsdatenbank ausgelesen werden,
Daten über den erwünschten Bereich aus der Kartendatenbank ausgelesen werden,
erste Schätzungen des elektromagnetischen Feldes im erwünschten Bereich aufgrund der Basisstationsdaten und Kartendaten bestimmt werden,
Daten über das erwünschte Gebäude aus der Gebäudedatenbank ausgelesen werden,
die Feldstärke innerhalb des Gebäudes aufgrund der Gebäudedaten, der ersten Schätzungen des elektromagnetischen Feldes und Basisstationsdaten bestimmt wird.

7. Verfahren nach Anspruch 2, **dadurch gekennzeichnet, dass**
eine Kartendatenbank, eine Gebäudedatenbank und eine Basisstationsdatenbank beim Verfahren gewartet werden, und dass
Basisstationsdaten aus der Basisstationsdatenbank ausgelesen werden,
Daten über das erwünschte Gebäude aus der Gebäudedatenbank ausgelesen werden,
erste Schätzungen des elektromagnetischen Feldes im erwünschten Gebäude aufgrund der Basisstationsdaten und Gebäudedaten bestimmt werden,
Daten über den erwünschten Bereich aus der Kartendatenbank ausgelesen werden,
die Feldstärke ausserhalb des Gebäudes aufgrund der Kartendaten, der ersten Schätzungen des elektromagnetischen Feldes und Basisstationsdaten bestimmt wird.

8. Vorrichtung zur Rechnung der Feldstärke eines Funknetzes in Verbindung mit Gebäuden (102, 114), welches Funknetz einen draussen befindlichen Sender (106) aufweist, **dadurch gekennzeichnet, dass** die Vorrichtung
Mittel (602) zur Bestimmung von Schätzungen des durch den Sender (106) produzierten elektromagnetischen Feldes auf Oberflächen, die das Gebäude (104) oder einen Teil des Gebäudes begrenzen, und
Mittel (600) zur Bestimmung der Feldstärke innerhalb des Gebäudes oder eines Teils des Gebäudes anhand der Schätzungen des elektromagnetischen Feldes, die für die Oberflächen gerechnet sind, die das Gebäude oder einen Teil des Gebäudes begrenzen, aufweist.

9. Vorrichtung zur Rechnung der Feldstärke eines Funknetzes in Verbindung mit Gebäuden (102, 114), welches Funknetz einen drinnen befindlichen Sender (106) aufweist, **dadurch gekennzeichnet, dass** die Vorrichtung
Mittel (600) zur Bestimmung von Schätzungen des durch den Sender (116) produzierten elektromagnetischen Feldes auf Oberflächen, die das Gebäude (102) oder einen Teil des Gebäudes begrenzen, und
Mittel (602) zur Bestimmung der Feldstärke ausserhalb des Gebäudes anhand der Schätzungen des elektromagnetischen Feldes, die für die Oberflächen gerechnet sind, die das Gebäude oder einen Teil des Gebäudes begrenzen, aufweist.

10. Vorrichtung nach Anspruch 8 oder 9, **dadurch gekennzeichnet, dass** die Vorrichtung Mittel (604) zur Wartung einer Kartendatenbase, Mittel (606) zur Wartung einer Gebäudedatenbase und Mittel (608) zur Wartung einer Basisstationsdatenbank aufweist.

## Revendications

1. Procédé de calcul de l'intensité de champ d'un réseau radio dans des bâtiments (102,114) un émetteur (106) étant situé en dehors, **caractérisé en ce que** le procédé consiste à
déterminer des estimations du champ électromagnétique généré par l'émetteur (106) sur les surfaces délimitant le bâtiment (104) ou une partie de celui-ci,
déterminer l'intensité de champ à l'intérieur du bâtiment ou une partie de celui-ci à l'aide des estimations du champ électromagnétique calculées pour les surfaces délimitant le bâtiment ou une partie de celui-ci.

2. Procédé de calcul de l'intensité de champ d'un réseau radio dans des bâtiments (102,114) un émetteur (116) étant situé à l'intérieur du bâtiment, **caractérisé en ce que** le procédé consiste à
déterminer des estimations du champ électromagnétique généré par l'émetteur (116) sur les surfaces délimitant le bâtiment (102) ou une partie de celui-ci,
déterminer l'intensité de champ à l'extérieur du bâtiment à l'aide des estimations du champ électromagnétique calculées pour les surfaces délimitant le bâtiment ou une partie de celui-ci.

3. Procédé selon la revendication 1 ou 2, **caractérisé en ce que** les surfaces délimitant le bâtiment comportent les murs extérieurs du bâtiment.

4. Procédé selon la revendication 1 ou 2, **caractérisé en ce que** les surfaces délimitant le bâtiment comportent les planchers et les murs extérieurs du bâtiment.

5. Procédé selon la revendication 1 ou 2, **caractérisé en ce qu'**en calculant les estimations du champ électromagnétique pour les surfaces du bâtiment, le modèle de propagation utilisé est différent de celui utilisé en calculant l'intensité de champ sur la base des estimations du champ électromagnétique calculées pour les surfaces.

6. Procédé selon la revendication 1, **caractérisé en ce qu'**on maintient une base de données de carte, une base de données de bâtiment et une base de données de station de base dans le procédé, et que
les données de la station de base sont lues depuis la base de données de la station de base,
les données sur la région désirée sont lues de la base de données de carte,
les premières estimations du champ électromagnétique dans la région désirée sont déterminées sur la base des données de la station de base et des données de carte,
les données sur le bâtiment désiré sont lues depuis la base de données de bâtiment,
l'intensité de champ à l'intérieur du bâtiment est déterminée sur la base des données de bâtiment, les premières estimations du champ électromagnétique et des données de la station de base.

7. Procédé selon la revendication 2, **caractérisé en ce qu'**on maintient
une base de données de carte, une base de données de bâtiment et une base de données de station de base dans le procédé, et que
les données de la station de base sont lues depuis la base de données de la station de base,
les données sur le bâtiment désiré sont lues depuis la base de données de bâtiment,
les premières estimations du champ électromagnétique dans le bâtiment désiré sont déterminées sur la base des données de la station de base et des données de bâtiment,
les données sur la région désirée sont lues depuis la base de données de carte,
l'intensité de champ à l'extérieur du bâtiment est déterminée sur la base des données de carte, des premières estimations du champ électromagnétique et des données de la station de base.

8. Dispositif pour calculer l'intensité de champ d'un réseau radio dans des bâtiments (102, 114), le réseau radio comportant un émetteur en dehors (106), **caractérisé en ce que** le dispositif comporte
des moyens (602) pour déterminer des estimations du champ électromagnétique généré par l'émetteur (106) sur les surfaces délimitant le bâtiment (104) ou une partie de celui-ci, et
des moyens (600) pour déterminer l'intensité de champ à l'intérieur du bâtiment ou une partie de celui-ci à l'aide des estimations du champ électromagnétique calculées pour les surfaces délimitant le bâtiment ou une partie de celui-ci.

9. Dispositif pour calculer l'intensité de champ d'un réseau radio dans les bâtiments (102, 114), le réseau radio comportant un émetteur (106) à l'intérieur du bâtiment, **caractérisé en ce que** le dispositif comporte
des moyens (600) pour déterminer des estimations du champ électromagnétique généré par l'émetteur (116) sur les surfaces délimitant le bâtiment (102) ou une partie de celui-ci, et
des moyens (602) pour déterminer l'intensité de champ à l'extérieur du bâtiment à l'aide des estimations du champ électromagnétique calculées pour les surfaces délimitant le bâtiment ou une partie de celui-ci.

10. Dispositif selon la revendication 8 ou 9, **caractérisé en ce que** le dispositif comporte des moyens (604) pour maintenir une base de données de carte, des moyens (606) pour maintenir une base de données de bâtiment et des moyens (608) pour maintenir une base de données de station de base.
